# EUROPEAN PATENT SPECIFICATION

(11) **EP 2 926 119 B1**
(45) Date of publication and mention of the grant of the patent: **22.02.2023**
(21) Application number: 13796102.5
(22) Date of filing: 29.11.2013
(51) Int. Cl.: G01N 21/64, G01N 21/80, G01N 21/77

(54) **METHOD OF MARKING OF MATERIAL, MARKED MATERIAL AND METHOD FOR AUTHENTICATING A MATERIAL**
VERFAHREN ZUR MARKIERUNG EINES MATERIALS, GEKENNZEICHNETES MATERIAL UND VERFAHREN ZUR AUTHENTIFIZIERUNG EINES MATERIALS
PROCEDE DE MARQUAGE D'UN MATERIAU, MATERIAU MARQUÉE ET PROCÉDÉ D'AUTHENTIFICATION D'UN MATERIAU

(30) Priority: 30.11.2012 US 201261731971 P; 20.12.2012 WO PCT/EP2012/076504
(43) Date of publication of application: 07.10.2015
(73) Proprietor: SICPA HOLDING SA, 1008 Prilly (CH)
(72) Inventor: DECOUX, Eric, CH-1800 Vevey (CH); SIRIGU, Lorenzo, CH-1004 Lausanne (CH); PASQUIER, Cécile, CH-1723 Marly (CH); SEPPEY, Joëlle, CH-1982 Euseigne (CH); WYSS, Patrick, CH-1680 Romont (CH)
(74) Representative: GatesIP
(86) International application number: PCT/EP2013/075059
(87) International publication number: WO 2014/083145

(56) References cited:
- WO-A2-2007/073919
- US-A- 4 816 462
- US-A- 6 081 734
- US-B1- 6 312 644
- US-B1- 6 312 958
- Laura Martín ET AL: "Fluorescence quenching of[beta]-carboline alkaloids in micellar media. A study to select the adequate surfactant to use in analytical techniques", LUMINESCENCE: THE JOURNAL OF BIOLOGICAL AND CHEMICAL LUMINESCENCE, vol. 20, no. 3, 1 January 2005 (2005-01-01), pages 152-161, XP55672193, GB ISSN: 1522-7235, DOI: 10.1002/bio.812

## Description

### FIELD OF THE INVENTION

The present invention is directed to the marking of commercial bulk products, so as to allow for the verification of the genuine nature and the absence of dilution of said products. Methods are disclosed for in-product marking, preferably invisible, as well as corresponding authentication procedures that permit determinations in the field as well as off-the-field for even more precise laboratory verification of adulteration levels of marked products.

### BACKGROUND OF THE INVENTION

In a global economy, which facilitates the trans-boundary movement of commercial goods, there is an increasing need, from the side of tax authorities and brand owners, for methods allowing to control the genuine nature of merchandise.

In the particular case of bulk products, such as distilled alcoholic beverages, perfumes, medical preparations, fuel and the like, most counterfeiting is actually performed by replacement or adulteration of the original contents, while recycling original packaging. Bulk products or bulk materials, in general, are divided solid or liquid materials which are handled by volume or by weight.

Material-based security solutions (overt and covert), incorporated into inks and applied through various printing processes, efficiently allow to distinguish genuine packaging from counterfeit one. However, a genuine packaging alone is no warranty by itself for that the product content is genuine too.

Product adulteration, i.e. the "dilution" of a genuine product with a low-grade counterfeits is hereby of particular concern. For example, a distilled alcoholic beverage, for which the taxes have been paid, might be subsequently diluted to a certain extent with an alcoholic 'back-yard'-product, manufactured out of tax. Such adulteration causes important losses to the state and can also have consequences to public health, in case where the "back-yard" alcohol of poor quality contains larger amounts of methanol and/or other toxic contaminants.

In the medical field, the dilution of drugs is particularly troublesome because dilution can lead to ineffectiveness of the drug. Moreover, dilution can lead to the lack of use of a therapeutic dose leading to the lack of preventive and/or therapeutic activity of the diluted material. For example, it will be extremely useful to authenticate and/or quantify drugs not only for humans for also for other animals, such as, chickens, pigs and calves.

The in-product marking and the authentication of bulk products is the object of numerous disclosures of the prior art: U.S. Pat. No. 5,156,653 discloses the marking of petroleum products with latent dyes (added at the level of parts per million), which can be subsequently revealed through a coloring reaction. U.S. Pat. No. 5,980,593 discloses the use of latent fluorescent markers, U.S. Pat. No. 5,498,808 the use of fluorescein esters, all for the same purpose. The use of NIR absorbing or emitting colorless dyes as markers has furthermore been disclosed in U.S. Pat. No. 5,525,516, U.S. Pat. No. 5,998,211, U.S. Pat. No. 5,804,447, U.S. Pat. No. 5,723,338 and U.S. Pat. No. 5,843,783.

Moreover, methods and colorants suited for incorporation into products for human application, such as alcoholic beverages, perfumes and medical preparations, are known as see, for example, U.S. Patent Nos. 8,071,386 and 8,268,623.

U.S. Pat. No. 5,942,444 and U.S. Pat. No. 5,776,713 disclose biologic marking agents, to be detected with a specific, monoclonal antibody. The technology suffers, however, from certain limitations, too: a) The preparation of monoclonal antibodies to specific marker molecules is costly and time-consuming, inhibiting a fast ' change of code" to a new marker and detection system; b) the amount of marker which must be present (e.g. 20 ppm in "Eau de Cologne" or in Whiskey) can be observed with the help of modern analytical tools such as GC-MS and HPLC, and this the easier as both methods recommend that no similar chemicals should be present in the product aside the marker, i.e. that there may be no "forest to hide the tree"; c) the proposed detection system is only of qualitative nature, able to detect the presence of a counterfeit or adulteration, without, however, the capability of quantifying the degree of adulteration.

US 2002/0048822 A1 discloses the marking of a product with a marker molecule which can be electrochemically reduced or oxidized. Presence and amount of the marker is electrochemically determined with the help of amperometric or coulometric electrodes. The proposed preferred authentication method is liquid chromatography (HPLC) separation coupled to an electrochemical detector, which is however not suitable as a field-portable auditing instrument. The method recommends as well that the product should be free of other electroactive compounds, i.e. that there may be no "forest to hide the tree".

U.S. Pat. No. 5,981,283 and U.S. Pat. No. 5,474,937 disclose the marking of liquids by non-radioactive isotopic compounds. The marker is of similar nature as the product to be marked and can thus be perfectly hidden. Only sub-ppm amounts of markers are furthermore required, i.e. typically parts per billion (ppb). The authentication is performed by modem analytical tools, comprising a gas-chromatography (GC) or electro-spray mass-spectroscopy (MS) separation step, followed by a classical fragmentation-mass-spectroscopy (MS) analysis step. However, even this approach suffers from limitations: a) The deliberate addition of isotopically marked compounds into food or beverage products is increasingly less tolerated by regulatory authorities; b) the cost of isotopic marking compounds is rather high, although the choice of such compounds is almost limitless; c) the authentication, by GC-MS or MS-MS, of ppb amounts of markers is time-consuming and requires expensive laboratory equipment and highly skilled operating personnel, which makes it unsuitable for rapid field audits.

US6312958 B1 discloses a method of marking liquids using at least two markers, wherein said markers absorb and fluoresce above 600 nm of the spectrum and the absorption range of at least one marker overlaps with the absorption range of at least one other marker. Preferred markers are compounds selected from the group consisting of metal-free and metal-containing phthalocyanines, metal-free and metal-containing naphthalocyanines, nickel-dithiolene complexes, aminium compounds of aromatic amines, methine dyes, squaric acid dyes and croconic acid dyes.

Laura Martin et al. "Fluorescence quenching of β-carboline alkaloids in micellar media. A study to select the adequate surfactant to use in analytical techniques", Luminescence, vol. 20, no. 3, pp 152-161 (2005), discloses a fluorescence quenching study in micellar media using β-carboline alkaloids such as harmine and harmane which are known to have an emission spectrum dependant on the solvent and the pH.

Despite the fact that solutions already exist, it remains that there is a need for techniques compatible with almost real-time analysis in a critical environment (e.g., farm for mass production of chickens using veterinary products). Moreover, there is need to be able to generate a quick and reliable response with the aid of basic or simple devices. Thus, there is a need to for markings which provide even further advantageous results over the prior art.

### SUMMARY OF THE INVENTION

The marking method and marking for determining the authenticity and/or the genuine nature of a material according to the present invention applies to bulk materials, that means liquids which are handled on a per volume or on a per weight base. The method is particularly suited for bulk materials which are destined to human, animal and/or poultry application, such as food and drink, pharmaceutical preparations or cosmetic liquid formulations.

There is provided a method for marking a material, as defined in appended independent claim 1.

There is also provided a method for determining whether a material is genuine , according to appended independent claim 10.

The method can further comprise:
f) dissolving in the aliquot of a) or c) different known concentrations, preferably at least three known concentrations, of a fluorescence quenching agent, preferably one or more halogen salts, the fluorescence quenching agent causing a progressive decrease in fluorescent intensity with increasing concentration of the fluorescence quenching agent of at least one component of the blend of components; g) measuring for each known concentration of the fluorescence quenching again a corresponding fluorescence intensity;
h) determining a curve of variation of fluorescence intensity with concentration of the fluorescence quenching agent; and
i) comparing the curve of h) with a known (calibration) curve of concentration of the fluorescence quenching agent versus fluorescence of at least two of the components of the blend of components.

The at least two alkaloids can be present in a concentration at a subppm level to a ppm level, based on the total composition including the material and the at least two different alkaloids.

The at least two different alkaloids can be present in a total concentration of the at least two different alkaloids of 0.1 ppm to 100 ppm, based on the total weight of the composition.

The variation of pH can be a pH variation of 2 to 6, or a pH variation of 2 to 4.5.

According to the invention, one of the two different alkaloids comprises at least one of quinine or a quinine salt, and the other of the at least two different alkaloids comprises at least one of a harmala compound or a salt of a harmala compound or lucigenin.

The first of the at least two different alkaloids can be selected from quinine, or salts of quinine (e.g., quinine sulfate, quinine hydrochloride), or lucigenin, and the other can be selected from harmine, harmane, harmaline, harmalol, tetrahydroharmine or tetrahydroharmane, harmalan, harmilinic acid, harmanamide, acetylnorharmine or acetylnorharmane.

Each of the at least two different alkaloids has a fluorescence that varies in spectral position and/or intensity according to variation of pH.

At least one of the at least two different alkaloids can have a fluorescence that is quenched in the presence of a salt.

Moreover, the at least two different alkaloids can have a fluorescence that is quenched in the presence of a salt.

The degree of quenching can be different for at least two of the at least two different alkaloids.

The first pH can be a pH of from 5 to 8, and the second pH can be a pH of 3.5 or below.

In one example, the excitation wavelength can be from 300 nm to 410 nm, or 340 nm to 365 nm.

An halogen salt can be added to the sample, and effects of the halogen salt with respect to at least one of the at least two different alkaloids can be determined.

The material can be combined with the solvent to obtain an aliquot of about 0.0001 to 3weight %, based upon the weight of the total weight of the aliquot.

The material can be a liquid, a solid, a gel, a colloid or a semi-liquid.

The alkaloid can be inert and non-deleterious to the material.

The material can be combined with the solvent to extract at least a portion of the alkaloid from the material.

The pH can be adjusted by adding an acid that does not cause a decay in fluorescence.

The solvent can be water.

The halogen salt can be selected from halogen chloride or halogen bromine, and can be added at a concentration between 10⁻³ to 10⁻¹M.

There is also provided a marked material, as defined in appended independent claim 24.

The material can be selected from alcohol, medicinal and/or veterinary preparation, perfume, liquid, cosmetic liquid formulation, and fuel. The material can be a liquid, a solid or a gel, a colloid or a semi-liquid and contain water and/or organic solvent.

### BRIEF DESCRIPTION OF THE DRAWINGS

The present invention is further described in the detailed description which follows, in reference to the drawings by way of non-limiting examples of exemplary embodiments of the present invention, in which like reference numerals represent similar parts throughout the several views of the drawings, and wherein:

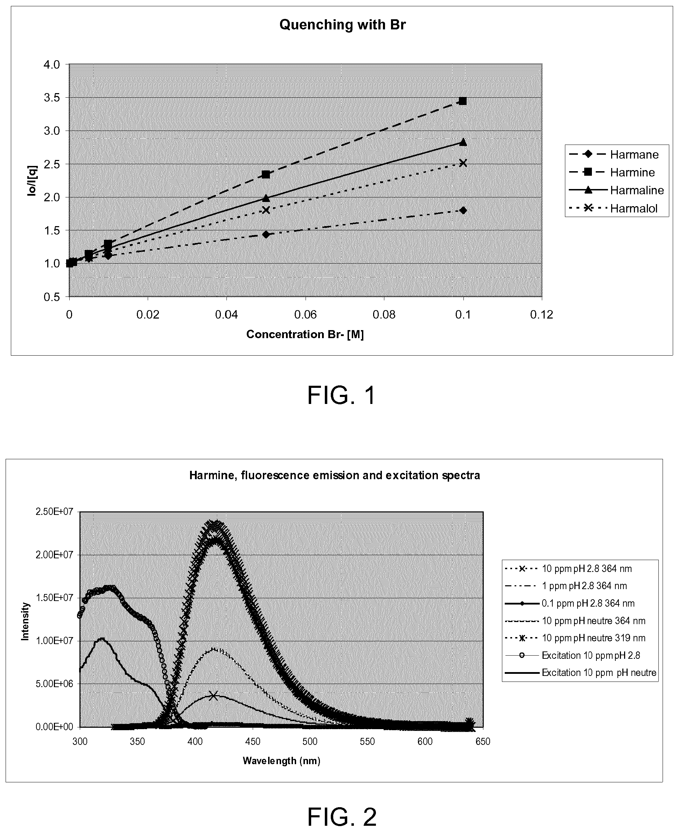

Fig. 1 is a graph of fluorescence quenching by bromine ions with respect to Harmane, Harmaline, Harmane and Harmalol;
Fig. 2 is a graph of Harmine emission spectrum with 364 nm.

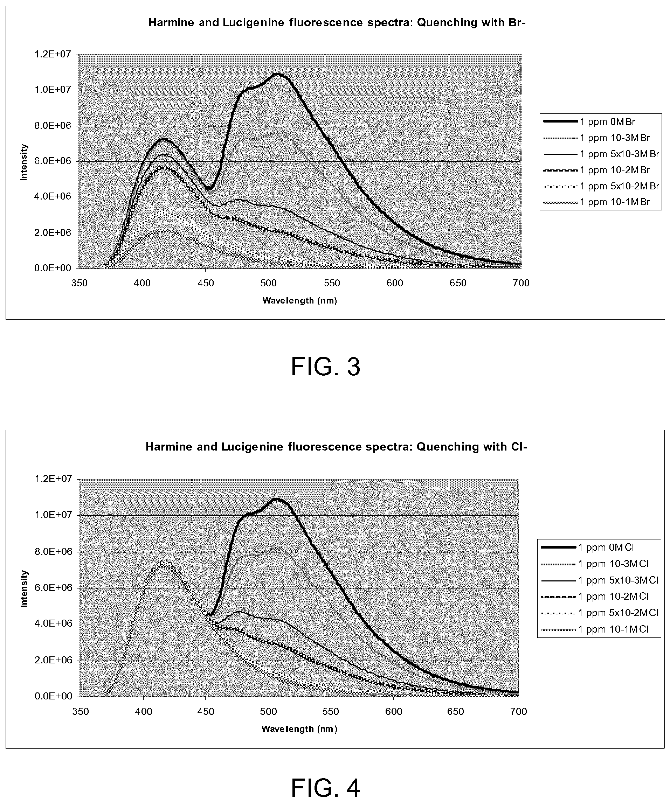

Fig. 3 is a graph of Harmine and Lucigenine quenching with bromine ions;
Fig. 4 is a graph of Harmine and Lucigenine quenching with chloride ions; and

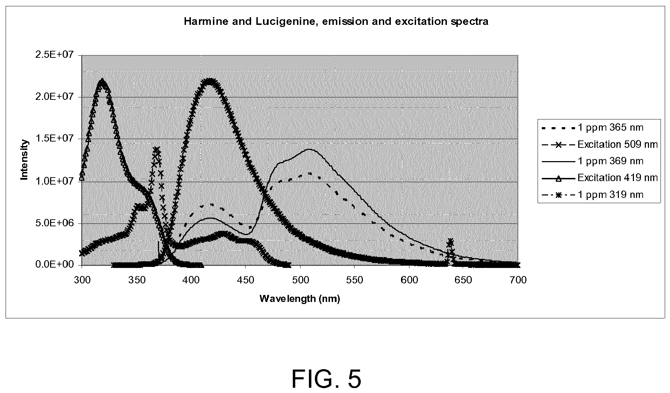

Fig. 5 is a graph of emission and excitation spectrum of Harmine and Lucigenine.

### DETAILED DESCRIPTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

Unless otherwise stated, a reference to a compound or component includes the compound or component by itself, as well as in combination with other compounds or components, such as mixtures of compounds.

As used herein, the singular forms "a," "an," and "the" include the plural reference unless the context clearly dictates otherwise. For example, reference to "a component" or "a fluorescence quenching agent would also mean that mixtures of one or more components or one or more fluorescence quenching agents can be present unless specifically excluded.

Except where otherwise indicated, the numerical parameters set forth in the specification and claims are approximations that may vary depending upon the desired properties sought to be obtained by the present invention. At the very least, each numerical parameter should be construed in light of the number of significant digits and ordinary rounding conventions.

Additionally, the recitation of numerical ranges within this specification is considered to be a disclosure of all numerical values and ranges within that range. For example, if a range is from about 1 to about 50, it is deemed to include, for example, 1, 7, 34, 46.1, 23.7, or any other value or range within the range.

The various embodiments disclosed herein can be used separately and in various combinations unless specifically stated to the contrary.

The markings herein can be soluble in and can chemically withstand a largely aqueous environment, such as provided by products for human and/or animal and/or poultry application. The present invention also provides for stable preparations even when packaged in transparent recipients, such as glass bottles, etc, in which such products are often commercialized. Moreover, the present invention is sufficiently non-toxic, especially when used in low concentrations that are detectable, so that the addition of markers to a food, drug or perfumery products can be compliant with public health and the prescriptions of regulatory bodies such as the FDA and/or the ATF bureau.

The present invention provides for in-product marking methods and techniques for various liquid materials which are suited for human and/or animal and/or poultry application.

In particular, there is provided herein a marking method and a method for determining the authenticity and the genuine nature of various materials, such as alcoholic beverages, perfumes, and medical preparations, such as pharmaceuticals, wherein the alkaloids can be easily incorporated (by mixing or by dissolution) into the material, are robust against aqueous environment and light, do not alter the properties (e.g.,. taste and smell) of the marked material, and do not have any negative impact on the health of the consumer.

It is a further object of the present invention to provide a marked material, which is particularly suited tor the screening in the field, and which can be backed by even more precise laboratory analyses.

The method includes the incorporation into a material of at least two alkaloids shaving different fluorescent characteristics. The alkaloids can be included as a predetermined blend into the material to thereby provide a desired combination of the at least two alkaloids. Thus, different alkaloids and/or the concentration of alkaloids can be varied to provide a desired marking of the material. The at least two alkaloids have a fluorescence intensity and/or spectral position that varies with changing pH. Moreover, they can have a fluorescence that varies by interaction with a fluorescence quenching agent that can be used when performing an analysis. Moreover, one of the two alkaloids, which can be the same or a different alkaloid than the alkaloid that changes fluorescence with pH, can have a fluorescence that changes in the presence of a fluorescence quenching agent.

Preferably, the components are non-toxic to mammals, including dogs, cats, sheep, calves, pigs, cows, humans , or poultry, such as, chickens. The non-toxic nature can be achieved by the component being non-toxic in any amount. Also, the non-toxic nature can be achieved by the component being present and being detectable at low concentrations. Therefore, the components can be included in the material at a concentration that is considered to be non-toxic, even if at a higher concentration of one or more of the components may be toxic.

Through the choosing of blends of alkaloids chemical keys can be devised that permit identification of materials to which the blends have been added. Thus, for example, a blend of alkaloids can be added to the material having known fluorescence characteristics of the alkaloids therein at one pH as well as at a second pH and/or in the presence of a pH quenching agent. By having a corresponding unique blend of alkaloids, a unique chemical key is provided. The addition of the unique blend of alkaloids leads to a specific blend having specific fluorescence characteristics for the alkaloids, contained therein. The known fluorescence characteristics of the alkaloids and how these fluorescence characteristics vary are associated with a specific profile to thereby obtain a chemical key. The determination of the specific profile (including how the fluorescence of one or more of the alkaloids varies under one or more conditions, such as pH variation or the presence of one or more quenching agents can be used to attest that a product is genuine, because the product contains a specific blend of alkaloids, as the chemical key.

In one example which does not fall under the scope of the present invention, the chemical key can be included in a database so that the detected key can be compared to keys included in the database to match with the known key in the database. The chemical key could also be known by any party or individual with a need to track or monitor and/or to check for authenticity of a product. For example, a producer and/or a retailer can provide or be provided with the key.

Accordingly, a material can be marked by including at least two alkaloids having different fluorescent characteristics in the material. The alkaloids are not already associated with the material. Each of the alkaloids has a fluorescence that varies in spectral position and/or intensity according to variation of pH. The alkaloids are included in the material so that their fluorescence can be qualitatively and/or quantitatively determined. Preferably, the alkaloids are non-toxic or are included in the material at a non-toxic concentration .

Each of the at least two different alkaloids are present in the material.

One of the at least two alkaloids includes quinine or salts thereof, such as quinine hydrochloride and quinine sulfate. The structure of quinine is illustrated, as follows:

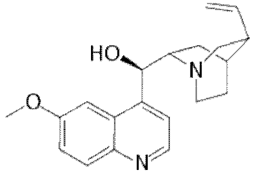

Quinine has fluorescence properties that vary with pH. Moreover, the fluorescence of quinine can be quenched by and is dependent upon the concentration of halogens, such as chloride ion and bromide ion. In this regard, quenching by using a fluorescence quenching agent refers to any process which decreases or modifies the fluorescence intensity and/or position of a component, e.g., quinine, of which fluorescence intensity is being determined. The fluorescence quenching agent causes quenching not directly by a change in pH, but can have different quenching effects at different pH. For example, the fluorescence quenching agent can have varying quenching effects at different pH. The quenching can be a quenching that provides a decrease in fluorescence of the component and can also include quenching to such a degree wherein the component no longer has a detectable fluorescence or a modification of the position of the fluorescence peak (or integrated fluorescence intensity) of the compounds used in the blend of alkaloids.

One of the at least two alkaloids can comprise lucigenin (10-Methyl-9-(10-methylacridin-10-ium-9-yl)acridin-10-ium dinitrate), as shown in the structure below:

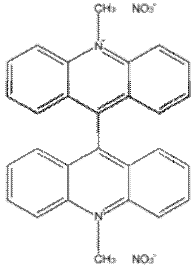

Lucigenin has fluorescence properties that vary with basic pH (e.g., greater than 7 to about 10). Moreover, the fluorescence of lucigenin can be quenched by and is dependent upon the concentration of halogens, such as chlorine and bromine.

One of the at least two alkaloids comprises harmala alkaloids having a beta-carboline moiety which is protonated, in a non-protonated state or a salt thereof. Such alkaloids can include, for example, β-carboline (9*H*-pyrido[3,4-*b*]indole, harmine, harmane, harmaline, harmalol, tetrahydroharmine or tetrahydroharmane, harmalan, harmilinic acid, harmanamide or acetylnorharmine or acetylnorharmane or lucigenin, which has fluorescence properties that vary with pH, but less than quinine and changes at strong basic pH, such as at basic pH, preferably 8 to 12. Moreover, the fluorescence of harmane can be quenched by and is dependent upon the concentration of bromine ion and iodine ion, but not of chlorine ion. Thus, according to the invention, one of the alkaloids comprises at least one of quinine or a quinine salt, and the other of the alkaloids comprises at least one of a harmala compound or a salt of a harmala compound or lucigenin. The at least two different alkaloids can be selected from quinine and salts of quinine (e.g., quinine sulfate, quinine hydrochloride), lucigenin, harmine, harmane, harmaline, harmalol, tetrahydroharmine, tetrahydroharmane, harmalan, harmilinic acid, harmanamide and acetylnorharmine or acetylnorharmane.

In one example an authentication procedure can include a blend of the components, such as a blend of two or more of quinine, harmine, harmane and lucigenin in order to obtain a complex spectrum where the fluorescence of each of the components modified by pH variation. The pH variation affecting the molecules in the blend will be proof that a predetermined blend, i.e., a desired key, is present by having the predetermined blend of two or more components and the expected pH variation.

In another example, as a further validation of the predetermined blend being present, and hence the genuineness of the authenticated material, a further test can be made to determine the blend of the components included in the material. In this regard, an aliquot of a fluorescence quenching agent, such as a halogen in the form of a halogen salt, including, for example, chlorine, bromine and iodine salts, such as NaCl, KBr, NaI, can be added to the sample being analyzed. The fluorescence quenching agent can induce quenching of the fluorescence of one or more of the components (fluorophores), which is dependent upon the specific component and the related fluorescence quenching agent. For example, a specific concentration of the fluorescence quenching agent, e.g., halogen, can reflect the exact composition of the blend or a modification of the curve of a curve of fluorescence vs. pH can indicate the presence of particular compounds in the blend. The Stern-Volmer plot quenching curve Io/I[q] as a function of the molar quencher concentration (where Io is an alkaloid fluoresce intensity in absence of quenchers and I[q] is the fluoresce intensity at a given quencher concentration represented by [q]) will be characteristic of the alkaloid blend for a given halogen quencher. The fluorescence quenching agent can be added at a concentration that provides sufficient decrease in fluorescence to be determined, such as between 10⁻³ to 10⁻¹M.

The fluorescence quenching agent can quench all of the components of the blend at different quenching rates depending on the given component, e.g., alkaloid, or just one or more of them. For example, quinine or lucignen fluorescence can be quenched by chloride ions, but chloride ions will have insignificant impact on the fluorescence of harmanes. In contrast, bromide ions or iodide ions will act as a quencher on all alkaloids although at different quenching rates. Accordingly, such variations in the actions of the fluorescence quenching agents depending upon the specific components in the blend can be used along with variations in pH sensitivity based upon the specific components to assist in generating keys that uniquely identify the associated marking as well as the associated marking including the specific blend.

In one example described herein, the authentication procedure can include procedures to make a qualitative or quantitative analysis of the sample. For example, the fluorescence baseline on an equivalent unmarked product can be acquired. The fluorescence signal (intensity) from a marked product can be acquired either at different excitation wavelength (in order to excite separately the different marker components) or at one optimized excitation wavelength but with a spectrally filtered detection (in order to discriminate between the different fluorescence components of the markers blend). For this purpose, the detector can be equipped with optical filters or dispersive gratings. Halogen salts (I, Cl, Br) can be added in sequence at increasing quantities and measuring at each step the fluorescence intensity. The curve of the obtained quenching curve can be measured to authenticate the marker.

In an alternative example, there can be added in sequence two halogen salts at increasing quantities measuring at each step the fluorescence intensity. The fluorescence intensity can be measured either with a wavelength selective detection (by means of filters or gratings) or by exciting selectively each alkaloid if the two alkaloids have different excitation wavelengths. The resultant quenching curve of the alkaloid blend obtained can be used to authenticate the marked product. In the alternative, separate quenching curves for a blend of alkaloids can be arrived at with using at least two different halogen quenchers to further assist in the obtaining of the chemical keys.

Each of the at least two different alkaloids has a fluorescence that varies in spectral position and/or intensity according to variation of pH. Moreover, at least one of the alkaloids can have a fluorescence that is quenched in the presence of a fluorescence quenching agent, such as a halogen salt, or more than one of the at least two different alkaloids has a fluorescence that is quenched in the presence of a fluorescence quenching agent, such as a halogen salt.

Still further, the degree of quenching can be different for at least two of the at least two different alkaloids.

There is also provided herein a method for determining whether a material is genuine by determining presence of a blend of at least two alkaloids each having a fluorescence which vary in spectral position and/or intensity according to variation of pH, the blend of alkaloids having been added to the material as a marker, the blend of alkaloids not being already associated with the material prior to being added as a marker, wherein one of the at least two different alkaloids comprises at least one of quinine and a quinine salt, and another of the at least two different alkaloids comprises at least one of a harmala compound and a salt of a harmala compound and/or lucigenin, the method comprising:
a) preparing an aliquot of a solvent containing a sample of the material at a first pH;
b) measuring spectral position of the fluorescence of the aliquot of a) at one or more excitation wavelengths;
c) adjusting the pH of the aliquot of b) to a second pH wherein at least one component of the blend of components has at least one of a different spectral position and/or intensity at the second pH than the first pH;
d) measuring spectral position of the fluorescence of the aliquot formed in c) at one or more excitation wavelengths; and
e) comparing a spectral position of the fluorescence between the fluorescence measured in b) and the fluorescence measured in d) with known spectral positions of at least two components of the blend of components at the pH's used in a) and c) to thereby determine whether the at least two components of the blend of components is present in determining whether the material is genuine.

To further define the chemical key with such a method, there can be provided:
f) dissolving in the aliquot of a) or c) different known concentrations, preferably at least three known concentrations, of a fluorescence quenching agent, preferably one or more halogen salts, the fluorescence quenching agent causing a progressive decrease in fluorescent intensity with increasing concentration of the fluorescence quenching agent of at least one component of the blend of components;
g) measuring for each known concentration of the fluorescence quenching agent a corresponding fluorescence intensity;
h) determining a curve of variation of fluorescence intensity with concentration of the fluorescence quenching agent; and
i) comparing the curve of h) with a known (calibration) curve of concentration of the fluorescence quenching agent versus fluorescence of at least two of the components of the blend of components.

In the methods disclosed herein, the pH can be varied to any degree wherein there is a determinable shift in position and/or intensity of the fluorescence, exemplary useful ranges include a pH of from 5 to 8 for the first pH and a pH of 3.5 or below for the second pH.

Similarly, the excitation wavelength can be varied depending upon the fluorescence characteristics of the components. Without limitation, useful emission wavelengths include excitation wavelengths of from 300 nm to 410 nm, or from 340nm to 365nm. Excitation wavelengths can be used that provide appropriate fluorescence and can be varied by specific components of the blend of components and how the fluorescence varies by pH and fluorescence quenching agent. Thus, one or more excitation wavelengths can be used, such as one or more excitation wavelengths at different pH. Moreover, for example, the one or more excitation wavelengths can be different at different pH.

An exemplary device for measuring the fluorescence can be a device that measures the spectrum, and can even be a device that can merely measure the peak (integrated fluorescence intensity). The device used can therefore be varied for laboratory and field use and can be varied depending upon the sensitivity of the desired test and the ensuring of the accuracy of the key.

The curve that results when using the fluorescence quenching agent can be linear or non-linear depending upon the fluorescence quenching agents and the components used in the blend of components.

In one example not falling under the scope of the claims, there can be included in the blend of components ingredients that have detectable parameters, such as a magnetic parameters; luminescent parameters; physical parameters, such a size and/or shape; optical parameters, such as absorption and/or reflectance characteristics that can be used as part of the chemical key. Thus, for example, the inclusion of certain size particles that are not normally included in the material to be marked can be used to even add a further level of detection.

The material to be marked can be selected from a distilled alcoholic beverage or an Eau de Cologne, perfume , or a pharmaceutical or veterinary preparation or a cosmetic liquid formulation, or a petroleum product e.g. the fuel. The marker is preferably incorporated into the bulk material by adding the components to the bulk material, such as by adding the components separately the bulk material or adding a composition containing the components. However, the incorporation can be achieved by any manner of combining the material to be marked and the blend of components. For example, the components can be added to the bulk material by adding one or more of the components individually to the bulk material and one or more compositions containing one or more components. Still further, one or more compositions, each composition containing one or more of the components, can be added to the bulk material. As discussed above, the material can be a liquid, a solid, a gel, a colloid or a semi-liquid.

As noted above, the components are preferably non-toxic, Thus, the addition or incorporation of such components and the resulting concentration preferably complies with various and numerous legal requirements in force for food, drugs, cosmetics. The amount of the marking composition and especially the individual concentrations of the components incorporated in the marked material or product can be easily kept at non-toxic levels in case the marked material or product is intended for human or animal use.

The components can be present in a concentration at a subppm level to a ppm level, based on the total composition including the material and the at least two different alkaloids. The at least two different alkaloids are present in a total concentration of the at least two different alkaloids of 0.1 ppm to 100 ppm, based on the total weight of the composition.

The method of marking a material, preferably a liquid comprises a) choosing a desired blend of components as a chemical key for the material to be marked; and b) combining the blend of components with the material to form a marked composition. The concentration of each component in the blend of components is preferably below a toxic concentration. Moreover, the total concentration of all of the components of the blend of components is preferably below a toxic concentration, especially when the material is intended for use in a form for contact and/or consumption by an animal, such as a food or pharmaceutical product.

The material can be an aqueous or a non-aqueous liquid.

In one example, the analysis of the material can include extraction of the components from the material, such as by extraction of the components from the sample into an aqueous liquid, such as water, alcohol, organic solvent or mixtures thereof (if forensic analysis is required).

In one example, concentration of the components in the marking composition and/or identification of the components and the baselines with respect to pure solvents can be maintained in a database. Moreover, the reference values may also be added directly to the product label as a code which will be readable for authentication purposes. Thus, reference values can be provided to authorized personal by the manufacturer of the product who has marked the product. The reference values can also be already available in form of a code for example applied on the container of the marked material. Beside these ways there are still other ways known to the skilled person to provide reference data.

The marking methods according to the present invention are particularly suited for marking bulk products destined to human or animal application or use, in particular products selected from the group of products comprising alcoholic beverages, perfumes, cosmetic liquid formulations, and pharmaceutical or veterinary preparations or petroleum products.

The variation of pH for changing the fluorescence characteristics of the components in the blend of components is a pH variation of 2 to 6, and can be a pH variation of 2 to 4.5. In one example, the pH can be adjusted by adding an acid that does not cause a decay in fluorescence, such as hydrosulfuric acid or hydrochloric acid or phosphoric acid.

The components are preferably inert and non-deleterious to the material.

The sample for performing the test can be prepared in any manner wherein the components can be determined in the sample. For example, the material can be combined with a solvent to extract at least a portion of the alkaloid from the material. The material can be combined with the solvent to obtain an aliquot of about 0.0001 to 3 weight %, based upon the weight of the total weight of the aliquot. The solvent can be aqueous or non-aqueous or organic or mixtures thereof, and preferably is water.

The blend of at least two different alkaloids in the marked material is present in a concentration of 0.00001 to 0.3% by weight, based on the total weight of the composition, preferably 0.0003 to 0.01% by weight, more preferably 0.0001 to 0.001% by weight. The marked material can be selected from alcohol, medicinal and/or veterinary preparation, perfume, liquid, cosmetic liquid formulation, and fuel.

The invention is now described in more detail with the help of examples.

### Example

Macrolide antibiotic solution is a drug that can be used for the treatment of respiratory infections in animals, such as in chicken and turkey flocks.

### Examples:

### Marking and use of the product

Macrolide antibiotic solution can be marked with a blend of alkaloids, such as a blend of quinine hydrochloride and harmine or harmane to provide a total weight of the blend of, for example, 0.1 to 0.3% by weight. An aliquot of Macrolide antibiotic solution can be diluted in potable water for livestock/nursery animals (especially chickens, but also pigs and calves), with variable dilution depending on the animals involved (up to 0.03 wt% of Macrolide antibiotic/water corresponding to concentrations of about 1 ppm or less of quinine in the water)

### Process for authenticating and quantifying Macrolide antibiotic solution

1. Measuring the base noise of a non-medicated water aliquot with the fluorescence detection device having an excitation of 365 nm.
2. Measuring the intensity of a medicated water aliquot, unaltered (and therefore at a PH 5.5 - 8, depending on the type of water used).
3. Measuring the fluorescence of the medicated water sample acidified at a pH <3 using an acid (generally inorganic, such as HCI or H₂SO₄ or H₃PO₄). The acid pH induces an increase in fluorescence intensity and a spectral displacement towards the red (from the purple to the blue).
4. Depending on the fluorescence intensity ratios, it is possible, not only to identify the marked Macrolide antibiotic in the water, but also to quantify it with precision that is dependent upon its concentration.

### First alternative authentication

- Proceed with stepped-acidification of the medicated water aliquot by measuring the fluorescence intensity at each step to confirm that the pH dependence on fluorescence intensity corresponds to that of quinine (authentication of quinine as a marker).

### Second alternative authentication

- After item 4 above, proceed with a stepped dissolving of the halogen salt (for example, Cl, Br, I) in the medicated water aliquot, which will have a dynamic quenching effect (collision between the molecules) on the quinine fluorescence.
- Proceed with the differential measurement of the fluorescence intensity of the aliquot as a function of the added salt concentration. The variation in fluorescence intensity will have a curve that is going to be specific to the fluorophore (quinine) and to the type of quencher (salt) used. The measurement of this curve makes it possible to authenticate the presence of the marker.

It is noted that the foregoing examples have been provided merely for the purpose of explanation and are in no way to be construed as limiting. Although the present invention has been described herein with reference to particular means, materials and embodiments, the present invention is not intended to be limited to the particulars disclosed herein; rather, the present invention extends to all functionally equivalent methods falling within the scope of the appended claims.

## Claims

1. A method for marking a material, comprising including a blend of at least two different alkaloids having different fluorescent characteristics in the material, the blend of at least two different alkaloids not being already associated with the material and each of the at least two different alkaloids having a fluorescence that varies in spectral position and/or intensity according to variation of pH, the blend of at least two different alkaloids being included in the material in an amount effective to be qualitatively and/or quantitatively determined, wherein one of the at least two different alkaloids comprises at least one of quinine or a quinine salt, and the other of the at least two different alkaloids comprises at least one of a harmala compound or a salt of a harmala compound or lucigenin.

2. The method for marking according to claim 1, wherein the at least two alkaloids are present in a concentration at a sub ppm level to a ppm level, based on the total composition including the material and the at least two different alkaloids.

3. The method for marking according to claim 2, wherein the at least two different alkaloids are present in a total concentration of the at least two different alkaloids of 0.1 ppm to 100 ppm, based on the total weight of the composition.

4. The method of marking according to any of the preceding claims, wherein the variation of pH is a pH variation of 2 to 6.

5. The method of marking according to claim 4, wherein the variation of pH is a pH variation of 2 to 4.5.

6. The method of marking according to any of claims 1-5, wherein the other of the at least two different alkaloids is selected from harmine, harmane, harmaline, harmalol, tetrahydroharmine, tetrahydroharmane, harmalan, harmilinic acid, harmanamide, acetylnorharmine or acetylnorharmane.

7. The method of marking according to any of the preceding claims, wherein at least one of the at least two different alkaloids has a fluorescence that is quenched in the presence of a fluorescence quenching agent.

8. The method of marking according to any of preceding claims, wherein more than one of the at least two different alkaloids has a fluorescence that is quenched in the presence of a fluorescence quenching agent.

9. The method of marking according to claim 8, wherein the degree of quenching is different for at least two of the at least two different alkaloids.

10. A method for determining whether a material is genuine by determining presence of a blend of at least two different alkaloids which have different fluorescent characteristics in the material, each of the at least two different alkaloids varying in spectral position and/or intensity according to variation of pH, the blend of the at least two different alkaloids having been added to the material as a marker, the at least two different alkaloids in the blend not being already associated with the material prior to being added as a marker, wherein one of the at least two different alkaloids comprises at least one of quinine or a quinine salt, and the other of the alkaloids comprises at least one of a harmala compound or a salt of a harmala compound or lucigenin, the method comprising:
a) preparing an aliquot of a solvent containing a sample of the material at a first pH;
b) measuring spectral position of the fluorescence of the aliquot of a) at one or more excitation wavelengths;
c) adjusting the pH of the aliquot of b) to a second pH wherein at least one component of the blend of at least two different alkaloids has at least one of a different spectral position and/or intensity at the second pH than the first pH;
d) measuring spectral position of the fluorescence of the aliquot formed in c) at one or more excitation wavelengths; and
e) comparing a spectral position of the fluorescence between the fluorescence measured in b) and the fluorescence measured in d) with known spectral positions of at least two components of the blend of at least two different alkaloids at the pH's used in a) and c) to thereby determine whether the at least two components of the blend of at least two different alkaloids is present in determining whether the material is genuine.

11. The method according to claim 10 further comprising:
f) dissolving in the aliquot of a) or c) different known concentrations of a fluorescence quenching agent, the fluorescence quenching agent causing a progressive decrease in fluorescent intensity with increasing concentration of the fluorescence quenching agent of at least one component of the blend of at least two different alkaloids;
g) measuring for each known concentration of the fluorescence quenching agent a corresponding fluorescence intensity;
h) determining a curve of variation of fluorescence intensity with concentration of the fluorescence quenching agent; and
i) comparing the curve of h) with a known curve of concentration of the fluorescence quenching agent versus fluorescence of at least two of the components of the at blend of at least two different alkaloids.

12. The method according to claim 10 or 11, wherein the first pH is a pH of from 5 to 8.

13. The method according to any one claims 10-12, wherein the second pH is a pH of 3.5 or below.

14. The method according to claims 10-13, wherein the other of the at least two different alkaloids is selected from harmine, harmane, harmaline, harmalol, tetrahydroharmine, tetrahydroharmane, harmalan, harmilinic acid, harmanamide, acetylnorharmine or acetylnorharmane.

15. The method according to claim 11, wherein more than one fluorescence quenching agent is added to the sample, and effects of the more than one fluorescence quenching agent with respect to at least two components of the blend of at least two different alkaloids are determined.

16. The method according to any one of claims 10-15, wherein the material is combined with the solvent to obtain an aliquot of about 0.0001 to 3 weight %, based upon the weight of the total weight of the aliquot.

17. The method according to any one of claims 10-16, wherein the material is a liquid.

18. The method according to any one of claims 10-17, wherein the alkaloid is inert and non-deleterious to the material.

19. The method according any one of claims 10-18, wherein the material is combined with the solvent to extract at least a portion of the alkaloid from the material.

20. The method according to any one of claims 10-19, wherein the pH is adjusted by adding an acid that does not cause a decay in fluorescence.

21. The method according to any one of claims 10-20, wherein the solvent is water.

22. The method according to any of claims 10-21, wherein the fluorescence quenching agent is selected from halogen chloride or halogen bromide, and is added at a concentration between 10⁻³ to 10⁻¹M.

23. The method according to any one of claims 10-22, wherein the fluorescence quenching agent comprises a halogen salt.

24. A material marked by a blend of at least two different alkaloids having different fluorescent characteristics in the material, the blend of at least two different alkaloids not being already associated with the material and each of the at least two different alkaloids having a fluorescence that varies in spectral position and/or intensity according to variation of pH, the blend of at least two different alkaloids being included in the material in an amount effective to be qualitatively and/or quantitatively determined, wherein one of the at least two different alkaloids comprises at least one of quinine or a quinine salt, and the other of the at least two different alkaloids comprises at least one of a harmala compound or a salt of a harmala compound or lucigenin, wherein the blend of at least two different alkaloids is present in a concentration of 0.00001 to 0.3% by weight, based on the total weight of the composition, preferably 0.0003 to 0.01% by weight, more preferably 0.0001 to 0.001% by weight.

25. The marked material according to claim 24 selected from alcohol, medicinal and/or veterinary preparation, perfume, liquid, cosmetic liquid formulation, and fuel.

26. The marked material according to either of claims 24 or 25, wherein the material is a liquid.

27. The marked material according to any one of claims 24-26, wherein the alkaloids are inert and non-deleterious to the material.

## Patentansprüche

1. Ein Verfahren zur Markierung eines Materials, aufweisend die Aufnahme einer Mischung von mindestens zwei verschiedenen Alkaloiden mit unterschiedlichen Fluoreszenzeigenschaften in das Material, wobei die Mischung von mindestens zwei verschiedenen Alkaloiden nicht bereits mit dem Material assoziiert ist und jedes der mindestens zwei verschiedenen Alkaloide eine Fluoreszenz aufweist, die sich in der spektralen Position und/oder Intensität entsprechend der Veränderung des pH-Wertes verändert, wobei die Mischung von mindestens zwei verschiedenen Alkaloiden in dem Material in einer Menge enthalten ist, die wirksam ist, um qualitativ und/oder quantitativ bestimmt zu werden, wobei eines der mindestens zwei verschiedenen Alkaloide mindestens eines von Chinin oder einem Chininsalz aufweist, und das andere der mindestens zwei verschiedenen Alkaloide mindestens eines von einer Harmala-Verbindung oder einem Salz einer Harmala-Verbindung oder Lucigenin aufweist.

2. Das Verfahren zur Markierung nach Anspruch 1, wobei die mindestens zwei Alkaloide in einer Konzentration von unter ppm bis zu einem ppm-Wert, bezogen auf die Gesamtzusammensetzung einschließlich des Materials und der mindestens zwei verschiedenen Alkaloide, vorhanden sind.

3. Das Verfahren zur Markierung nach Anspruch 2, wobei die mindestens zwei verschiedenen Alkaloide in einer Gesamtkonzentration der mindestens zwei verschiedenen Alkaloide von 0,1 ppm bis 100 ppm, bezogen auf das Gesamtgewicht der Zusammensetzung, vorhanden sind.

4. Das Verfahren zur Markierung nach einem der vorhergehenden Ansprüche, wobei die Veränderung des pH-Wertes eine pH-Veränderung von 2 bis 6 ist.

5. Das Verfahren zur Markierung nach Anspruch 4, wobei die Veränderung des pH-Wertes eine pH-Veränderung von 2 bis 4,5 ist.

6. Das Verfahren zur Markierung nach einem der Ansprüche 1-5, wobei das andere der mindestens zwei verschiedenen Alkaloide ausgewählt ist aus Harmin, Harman, Harmalin, Harmalol, Tetrahydroharmin, Tetrahydroharman, Harmalan, Harmilinsäure, Harmanamid, Acetylnorharmin oder Acetylnorharman.

7. Das Verfahren zur Markierung nach einem der vorhergehenden Ansprüche, wobei mindestens eines der mindestens zwei verschiedenen Alkaloide eine Fluoreszenz aufweist, die in Anwesenheit eines fluoreszenzlöschenden Mittels gelöscht wird.

8. Das Verfahren zur Markierung nach einem der vorhergehenden Ansprüche, wobei mehr als eines der mindestens zwei verschiedenen Alkaloide eine Fluoreszenz aufweist, die in Anwesenheit eines fluoreszenzlöschenden Mittels gelöscht wird.

9. Das Verfahren zur Markierung nach Anspruch 8, wobei der Grad der Löschung für mindestens zwei der mindestens zwei verschiedenen Alkaloide unterschiedlich ist.

10. Ein Verfahren zum Bestimmen, ob ein Material echt ist, durch Bestimmen des Vorhandenseins einer Mischung von mindestens zwei verschiedenen Alkaloiden, die unterschiedliche Fluoreszenzeigenschaften in dem Material haben, wobei sich jedes der mindestens zwei verschiedenen Alkaloide in der spektralen Position und/oder Intensität entsprechend der Veränderung des pH-Wertes verändert, wobei die Mischung von mindestens zwei verschiedenen Alkaloide dem Material als ein Marker zugegeben wurde, wobei die mindestens zwei verschiedenen Alkaloide in der Mischung nicht bereits vor der Zugabe als Marker mit dem Material assoziiert waren, wobei eines der mindestens zwei verschiedenen Alkaloide mindestens eines von Chinin oder einem Chininsalz aufweist, und das andere der Alkaloide mindestens eines von einer Harmala-Verbindung oder einem Salz einer Harmala-Verbindung oder Lucigenin aufweist, wobei das Verfahren umfasst:
a) Herstellung eines Aliquots eines Lösungsmittels, das eine Probe des Materials mit einem ersten pH-Wert enthält;
b) Messung der spektralen Position der Fluoreszenz des Aliquots von a) bei einer oder mehreren Anregungswellenlängen;
c) Einstellen des pH-Werts des Aliquots von b) auf einen zweiten pH-Wert, wobei mindestens ein Bestandteil der Mischung von mindestens zwei verschiedenen Alkaloiden bei dem zweiten pH-Wert eine andere spektrale Position und/oder Intensität aufweist als bei dem ersten pH-Wert;
d) Messung der spektralen Position der Fluoreszenz des in c) gebildeten Aliquots bei einer oder mehreren Anregungswellenlängen; und
e) Vergleichen einer spektralen Position der Fluoreszenz zwischen der in b) gemessenen Fluoreszenz und der in d) gemessenen Fluoreszenz mit bekannten spektralen Positionen von mindestens zwei Bestandteilen der Mischung von mindestens zwei verschiedenen Alkaloiden bei den in a) und c) verwendeten pH-Werten, um dadurch zu bestimmen, ob die mindestens zwei Bestandteile der Mischung von mindestens zwei verschiedenen Alkaloiden vorhanden sind, um zu bestimmen, ob das Material echt ist.

11. Das Verfahren nach Anspruch 10, das weiter aufweist:
f) Auflösen verschiedener bekannter Konzentrationen eines fluoreszenzlöschenden Mittels in dem Aliquot von a) oder c), wobei das fluoreszenzlöschende Mittel eine progressive Abnahme der Fluoreszenzintensität mit zunehmender Konzentration des fluoreszenzlöschenden Mittels von mindestens einem Bestandteil der Mischung von mindestens zwei verschiedenen Alkaloiden bewirkt;
g) Messung einer entsprechenden Fluoreszenzintensität für jede bekannte Konzentration des fluoreszenzlöschenden Mittels;
h) Bestimmen einer Kurve der Veränderung der Fluoreszenzintensität mit der Konzentration des fluoreszenzlöschenden Mittels; und
i) Vergleichen der Kurve von h) mit einer bekannten Kurve der Konzentration des fluoreszenzlöschenden Mittels gegen die Fluoreszenz von mindestens zwei der Bestandteile der Mischung von mindestens zwei verschiedenen Alkaloiden.

12. Das Verfahren nach Anspruch 10 oder 11, wobei der erste pH-Wert ein pH-Wert von 5 bis 8 ist.

13. Das Verfahren nach einem der Ansprüche 10-12, wobei der zweite pH-Wert ein pH-Wert von 3,5 oder niedriger ist.

14. Das Verfahren nach den Ansprüchen 10-13, wobei das andere der mindestens zwei verschiedenen Alkaloide ausgewählt ist aus Harmin, Harman, Harmalin, Harmalol, Tetrahydroharmin, Tetrahydroharman, Harmalan, Harmilinsäure, Harmanamid, Acetylnorharmin oder Acetylnorharman.

15. Das Verfahren nach Anspruch 11, wobei der Probe mehr als ein fluoreszenzlöschendes Mittel zugegeben wird und die Auswirkungen des mehr als einen fluoreszenzlöschenden Mittels in Bezug auf mindestens zwei Bestandteile der Mischung von mindestens zwei verschiedenen Alkaloiden bestimmt werden.

16. Das Verfahren nach einem der Ansprüche 10-15, wobei das Material mit dem Lösungsmittel kombiniert wird, um eine Aliquote von etwa 0,0001 bis 3 Gew.-%, bezogen auf das Gewicht des Gesamtgewichts der Aliquote, zu erhalten.

17. Das Verfahren nach einem der Ansprüche 10-16, wobei das Material eine Flüssigkeit ist.

18. Das Verfahren nach einem der Ansprüche 10-17, wobei das Alkaloid inert und nicht schädlich für das Material ist.

19. Das Verfahren nach einem der Ansprüche 10-18, wobei das Material mit dem Lösungsmittel kombiniert wird, um mindestens einen Teil des Alkaloids aus dem Material zu extrahieren.

20. Das Verfahren nach einem der Ansprüche 10-19, wobei der pH-Wert durch Zugabe einer Säure eingestellt wird, die keine Abnahme der Fluoreszenz verursacht.

21. Das Verfahren nach einem der Ansprüche 10-20, wobei das Lösungsmittel Wasser ist.

22. Das Verfahren nach einem der Ansprüche 10-21, wobei das fluoreszenzlöschende Mittel ausgewählt ist aus Halogenchlorid oder Halogenbromid und in einer Konzentration zwischen 10⁻³ bis 10⁻¹M zugegeben wird.

23. Das Verfahren nach einem der Ansprüche 10-22, wobei das fluoreszenzlöschende Mittel ein Halogensalz aufweist.

24. Ein Material, das durch eine Mischung von mindestens zwei verschiedenen Alkaloiden mit unterschiedlichen Fluoreszenzeigenschaften in dem Material markiert ist, wobei die Mischung von mindestens zwei verschiedenen Alkaloiden nicht bereits mit dem Material assoziiert ist und jedes der mindestens zwei verschiedenen Alkaloide eine Fluoreszenz aufweist, die sich in der spektralen Position und/oder Intensität entsprechend der Veränderung des pH-Wertes verändert, wobei die Mischung von mindestens zwei verschiedenen Alkaloiden in dem Material in einer Menge enthalten ist, die wirksam ist, um qualitativ und/oder quantitativ bestimmt zu werden, wobei eines der mindestens zwei verschiedenen Alkaloide mindestens ein Chinin oder ein Chininsalz aufweist und das andere der mindestens zwei verschiedenen Alkaloide mindestens eine Harmala-Verbindung oder ein Salz einer Harmala-Verbindung oder Lucigenin aufweist, wobei die Mischung von mindestens zwei verschiedenen Alkaloiden in einer Konzentration von 0,00001 bis 0,3 Gew.-%, bezogen auf das Gesamtgewicht der Zusammensetzung, vorzugsweise 0,0003 bis 0,01 Gew.-%, besonders bevorzugt 0,0001 bis 0,001 Gew.-%, vorhanden ist.

25. Das markierte Material nach Anspruch 24, ausgewählt aus Alkohol, medizinischen und/oder veterinärmedizinischen Präparaten, Parfüm, Flüssigkeiten, kosmetischen Flüssigformulierungen und Kraftstoffen.

26. Das markierte Material nach einem der Ansprüche 24 oder 25, wobei das Material eine Flüssigkeit ist.

27. Das markierte Material nach einem der Ansprüche 24-26, wobei die Alkaloide inert und nicht schädlich für das Material sind.

## Revendications

1. Procédé pour marquer un matériau, comprenant l'inclusion d'un mélange d'au moins deux alcaloïdes différents présentant différentes caractéristiques de fluorescence dans le matériau, le mélange d'au moins deux alcaloïdes différents n'étant pas déjà associé au matériau et chacun des au moins deux alcaloïdes différents présentant une fluorescence qui varie en position spectrale et/ou intensité en fonction de la variation de pH, le mélange d'au moins deux alcaloïdes différents étant inclus dans le matériau dans une quantité efficace pour être déterminée qualitativement et/ou quantitativement, dans lequel un des au moins deux alcaloïdes différents comprend au moins l'un de la quinine ou d'un sel de quinine, et l'autre des au moins deux alcaloïdes différents comprend au moins l'un d'un composé harmala ou d'un sel d'un composé harmala ou de lucigénine.

2. Procédé de marquage selon la revendication 1, dans lequel les au moins deux alcaloïdes sont présents dans une concentration à un niveau sous ppm à un niveau ppm, sur la base de la composition totale comportant le matériau et les au moins deux alcaloïdes différents.

3. Procédé de marquage selon la revendication 2, dans lequel les au moins deux alcaloïdes différents sont présents dans une concentration totale des au moins deux alcaloïdes différents de 0,1 ppm à 100 ppm, sur la base du poids total de la composition.

4. Procédé de marquage selon l'une quelconque des revendications précédentes, dans lequel la variation de pH est une variation de pH de 2 à 6.

5. Procédé de marquage selon la revendication 4, dans lequel la variation de pH est une variation de pH de 2 à 4,5.

6. Procédé de marquage selon l'une quelconque des revendications 1 à 5, dans lequel l'autre des au moins deux alcaloïdes différents est sélectionné parmi l'harmine, l'harmane, l'harmaline, l'harmalol, la tétrahydroharmine, la tétrahydroharmane, l'harmalane, l'acide harmilinique, l'harmanamide, l'acétylnorharmine ou l'acétylnorharmane.

7. Procédé de marquage selon l'une quelconque des revendications précédentes, dans lequel au moins l'un des au moins deux alcaloïdes différents présente une fluorescence qui est atténuée en présence d'un agent d'atténuation de la fluorescence.

8. Procédé de marquage selon l'une quelconque des revendications précédentes, dans lequel plus d'un des au moins deux alcaloïdes différents présente une fluorescence qui est atténuée en présence d'un agent d'atténuation de la fluorescence.

9. Procédé de marquage selon la revendication 8, dans lequel le degré d'atténuation est différent pour au moins deux des au moins deux alcaloïdes différents.

10. Procédé pour déterminer si un matériau est véritable par détermination de la présence d'un mélange d'au moins deux alcaloïdes différents qui présentent différentes caractéristiques de fluorescence dans le matériau, chacun des au moins deux alcaloïdes différents variant en position spectrale et/ou intensité en fonction d'une variation de pH, le mélange des au moins deux alcaloïdes différents ayant été ajouté au matériau en tant que marqueur, les au moins deux alcaloïdes différents dans le mélange n'étant pas déjà associés au matériau avant d'être ajoutés en tant que marqueur, dans lequel un des au moins deux alcaloïdes différents comprend au moins l'un de la quinine ou d'un sel de quinine, et l'autre des alcaloïdes comprend au moins l'un d'un composé harmala ou d'un sel d'un composé harmala ou de lucigénine, le procédé comprenant :
a) la préparation d'un aliquote d'un solvant contenant un échantillon du matériau à un premier pH ;
b) la mesure d'une position spectrale de la fluorescence de l'aliquote de a) à une ou plusieurs longueurs d'onde d'excitation ;
c) l'ajustement du pH de l'aliquote de b) à un deuxième pH dans lequel au moins un composant du mélange d'au moins deux alcaloïdes différents présente au moins l'une d'une position spectrale et/ou intensité différente au deuxième pH qu'au premier pH ;
d) la mesure de la position spectrale de la fluorescence de l'aliquote formée en c) à une ou plusieurs longueurs d'onde d'excitation ; et
e) la comparaison d'une position spectrale de la fluorescence entre la fluorescence mesurée en b) et la fluorescence mesurée en d) à des positions spectrales connues d'au moins deux composants du mélange d'au moins deux alcaloïdes différents au pH utilisé en a) et c) pour déterminer ainsi si les au moins deux composants du mélange d'au moins deux alcaloïdes différents est présent lors du fait de déterminer si le matériau est véritable.

11. Procédé selon la revendication 10, comprenant en outre :
f) la dissolution dans l'aliquote de a) ou c) de différentes concentrations connues d'un agent d'atténuation de la fluorescence, l'agent d'atténuation de la fluorescence provoquant une diminution progressive de l'intensité de fluorescence à mesure qu'augmente la concentration de l'agent d'atténuation de la fluorescence d'au moins un composant du mélange d'au moins deux alcaloïdes différents ;
g) la mesure pour chaque concentration connue de l'agent d'atténuation de la fluorescence d'une intensité de fluorescence correspondante ;
h) la détermination d'une courbe de variation de l'intensité de fluorescence avec la concentration de l'agent d'atténuation de la fluorescence ; et
i) la comparaison de la courbe de h) à une courbe de concentration connue de l'agent d'atténuation de la fluorescence par rapport à la fluorescence d'au moins deux des composants du au mélange d'au moins deux alcaloïdes différents.

12. Procédé selon la revendication 10 ou 11, dans lequel le premier pH est un pH de 5 à 8.

13. Procédé selon l'une quelconque des revendications 10 à 12, dans lequel le deuxième pH est un pH de 3,5 ou moins.

14. Procédé selon les revendications 10 à 13, dans lequel l'autre des au moins deux alcaloïdes différents est sélectionné parmi l'harmine, l'harmane, l'harmaline, l'harmalol, la tétrahydroharmine, la tétrahydroharmane, l'harmalane, l'acide harmilinique, l'harmanamide, l'acétylnorharmine ou l'acétylnorharinane.

15. Procédé selon la revendication 11, dans lequel plus d'un agent d'atténuation de la fluorescence est ajouté à l'échantillon, et les effets du plus d'un agent d'atténuation de la fluorescence par rapport aux au moins deux composants du mélange d'au moins deux alcaloïdes différents sont déterminés.

16. Procédé selon l'une quelconque des revendications 10 à 15, dans lequel le matériau est combiné au solvant pour obtenir un aliquote d'environ 0,0001 à 3 % en poids, sur la base du poids du poids total de l'aliquote.

17. Procédé selon l'une quelconque des revendications 10 à 16, dans lequel le matériau est un liquide.

18. Procédé selon l'une quelconque des revendications 10 à 17, dans lequel l'alcaloïde est inerte et non délétère pour le matériau.

19. Procédé selon l'une quelconque des revendications 10 à 18, dans lequel le matériau est combiné au solvant pour extraire au moins une partie de l'alcaloïde du matériau.

20. Procédé selon l'une quelconque des revendications 10 à 19, dans lequel le pH est ajusté par ajout d'un acide qui ne provoque pas un déclin de la fluorescence.

21. Procédé selon l'une quelconque des revendications 10 à 20, dans lequel le solvant est l'eau.

22. Procédé selon l'une quelconque des revendications 10 à 21, dans lequel l'agent d'atténuation de la fluorescence est choisi parmi le chlorure d'halogène ou bromure d'halogène, et est ajouté à une concentration comprise entre 10⁻³ et 10⁻¹ M.

23. Procédé selon l'une quelconque des revendications 10 à 22, dans lequel l'agent d'atténuation de la fluorescence comprend un sel d'halogène.

24. Matériau marqué par un mélange d'au moins deux alcaloïdes différents présentant différentes caractéristiques de fluorescence dans le matériau, le mélange d'au moins deux alcaloïdes différents n'étant pas déjà associé au matériau et chacun des au moins deux alcaloïdes différents présentant une fluorescence qui varie en position spectrale et/ou intensité en fonction de la variation de pH, le mélange d'au moins deux alcaloïdes différents étant inclus dans le matériau dans une quantité efficace pour être déterminée qualitativement et/ou quantitativement, dans lequel un des au moins deux alcaloïdes différents comprend au moins l'un de la quinine ou d'un sel de quinine, et l'autre des au moins deux alcaloïdes différents comprend au moins l'un d'un composé harmala ou d'un sel d'un composé harmala ou de lucigénine, dans lequel le mélange d'au moins deux alcaloïdes différents est présent dans une concentration de 0,00001 à 0,3 % en poids, sur la base du poids total de la composition, de préférence 0,0003 à 0,01 % en poids, plus préférentiellement 0,0001 à 0,001 % en poids.

25. Matériau marqué selon la revendication 24 choisi parmi un alcool, une préparation médicale et/ou vétérinaire, un parfum, un liquide, une formulation liquide cosmétique, et un combustible.

26. Matériau marqué selon l'une des revendications 24 ou 25, dans lequel le matériau est un liquide.

27. Matériau marqué selon l'une quelconque des revendications 24 à 26, dans lequel les alcaloïdes sont inertes et non délétères pour le matériau.
